Europäisches Patentamt

European Patent Office

Office européen des brevets

(19)

(11) Veröffentlichungsnummer: **0 152 523**
**B1**

(12)

## EUROPÄISCHE PATENTSCHRIFT

(45) Veröffentlichungstag der Patentschrift: 16.05.90

(51) Int. Cl.⁵: **G 01 S 3/86**

(21) Anmeldenummer: **84110750.1**

(22) Anmeldetag: **08.09.84**

(54) Verfahren zur Ortung von Signalquellen mit Störsignalunterdrückung.

(30) Priorität: 22.02.84 DE 3406343

(43) Veröffentlichungstag der Anmeldung:
28.08.85 Patentblatt 85/35

(45) Bekanntmachung des Hinweises auf die
Patenterteilung:
16.05.90 Patentblatt 90/20

(84) Benannte Vertragsstaaten:
FR GB IT

(56) Entgegenhaltungen:
DE-A-1 441 985
US-A-3 056 959
US-A-4 268 829
US-A-4 283 767

(73) Patentinhaber: **Messerschmitt-Bölkow-Blohm GmbH**
**Hünefeldstrasse 1-5**
**D-2800 Bremen 1 (DE)**

(72) Erfinder: **Jäger, Reinhard, Dipl.-Ing.**
**Schliemannstrasse 14**
**D-2870 Delmenhorst (DE)**
Erfinder: **VON Volckamer, Peter**
**Butlandsweg 4**
**D-2800 Bremen (DE)**

**Beschreibung**

Die Erfindung bezieht sich auf ein Verfahren zur Ortung von Signalquellen, insbesondere Schallquellen mit mehreren, räumlich getrennt angeordneten Sensoren, deren Ausgangssignale nach dem Prinzip der Kreuzleistungsdichte zur Erzeugung von Richtungsinformationen der georteten Signalquellen miteinander verknüpft werden.

Zur Ortung von Signalquellen ist es üblich, die jeweils interessierenden Signale mit für diesen Signalbereich ausgelegten Sensoren zu erfassen und auszuwerten. So ist es z.B. mit Schallsensoren, wie Mikrophonen, möglich, Raumüberwachungen durchzuführen, um bei millitärischen Einsätzen Schall aussendende Ziele zu orten. Voraussetzung für eine einwandfreie Funktion ist jedoch das Fehlen jeglichen Störschalls, was aber keinesfalls unterstellt werden kann. Bei der Ortung von Signalquellen ist es daher äußerst wichtig, Störsignale zu unterdrücken, was insbesondere dann besonderes Gewicht erhält, wenn die Ortungsanlage auf einem selbst Störsignale erzeugenden Trägerfahrzeug untergebracht ist. In einem solchen Fall ist eine Ortung von Schallquellen nur möglich, wenn es gelingt, den Störschall des eigenen Trägerfahrzeuges zu unterdrücken.

Aus US—A—4 268 829 ist ein Prozessor nur Steuerung des Empfangs- bzw. Sendediagramms einer Antennenanordnung bekannt, welcher es ermöglicht, ein Diagramm für eine einer Störsignalquelle entsprechenden Richtung mit einer Nullstelle zu versehen. Zu diesem Zweck wird das von einer Hilfantenne empfangene Signal der Störsignalquelle dem Signal der Hauptantenne nach geeigneter Justierung der Phase und Amplitude derart überlagert, daß der Störsignalanteil im Ausgang der Hauptantenne kompensiert wird.

Der Erfindung liegt daher die Aufgabe zugrunde, ein Verfahren zur Ortung von Signalquellen der eingangs genannten Art zu schaffen, welches in der Lage ist, Signale von Störquellen, insbesondere Störsignale eines eigenen Trägerfahrzeuges zu eliminieren.

Diese Aufgabe ist gemäß der Erfindung durch die im Anspruch 1 angegebenen Maßnahmen gelöst.

Es ist zweckmäßig, den Normierungsfaktor für jede als Signal einer Störquelle im Frequenzspektrum ermittelte Signalfrequenz (Störlinie) getrennt zu ermitteln und bei der Eliminierung selektiv zu berücksichtigen. Eine solche Verfahrensweise erlaubt es, neben der Hauptstörfrequenz Nebenstörfrequenzen, ausgehend von anderen Entstehungsorten, im Frequenzspektrum der Sensorausgangssignale zu unterdrücken. Der Normierungsfaktor kann hierbei aus dem Quotienten der komplexen Vektoren zweier Sensorausgangssignale bestehen, wobei dieser Quotient einen komplexen, die Dämpfung und die Laufzeit aufgrund der räumlichen Trennung der Sensoren berücksichtigender Faktor darstellt.

Das erfindungsgemäße Verfahren gestattet es daher, mit wenigstens drei akustischen Signalen durch Verarbeitung ausgeprägte Richtcharakteristiken für geortete Ziele bei vollständiger Unterdrückung von aus anderen Richtungen stammenden Störsignale zu gewinnen. Damit ergibt sich nach Bildung der Kreuzleistungsdichte eine erhebliche Verbesserung für die Erfassung von Schallquellen und damit eine genauere Aussage der Schalleinfallsrichtung.

Das erfindungsgemäße Verfahren wird anhand von in der Zeichnung dargestellten Beispielen näher erläutert. Es zeigen:

Fig. 1 das Prinzip der Ermittlung des Einfallswinkels bei zwei Schallsensoren aus der Laufzeitdifferenz der Nutzsignale,

Fig. 2 das Prinzip der Laufzeiterfassung mit drei Schallsensoren und mit einer Störquelle im Nahfeld,

Fig. 3 ein Gebirge erfaßter und aufgezeichneter Schallsignale und

Fig. 4 ein Gebirge aufgezeichneter, von Störsignalen befreiter Schallsignale.

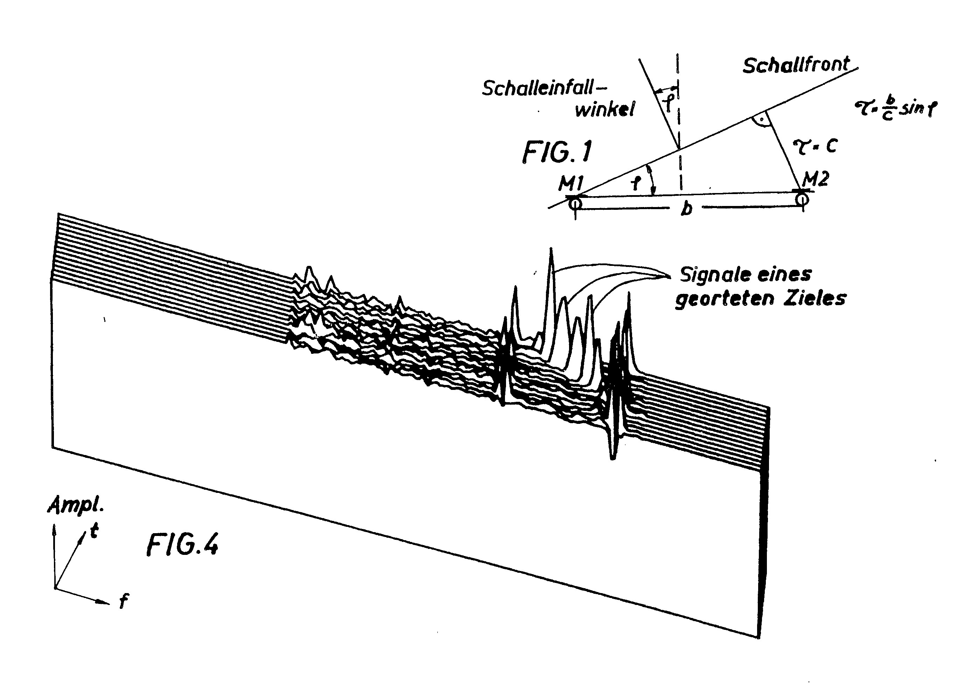

Bei dem erfindungsgemäßen Verfahren wird angestrebt, die aus definierter Richtung einfallenden Störsignale, z.B. Störschall, zu unterdrücken. Hierzu wird von der Überlegung ausgegangen, daß bei definiertem Abstand zweier Schallsensoren eine Schalleinfallsrichtung einer bestimmten Laufzeit entspricht. Wenn, wie in der Prinzipdarstellung nach Fig. 1, der Einfallswinkel φ bekannt ist, dann ergibt sich der Laufzeit unterschied aus dem bekannten Abstand b der Mikrophone $M_1$ und $M_2$ und der Schallgeschwindigkeit zu

$$\tau = \frac{b}{c}\sin\varphi$$

Dabei ergibt sich eine Auslöschung des Schalls aus der Richtung des Einfallwinkels φ, wenn das Ausgangssignal vom Mikrophon $M_2$ vom um τ verzögerten Ausgangssignal des Mikrophons $M_1$ subtrahiert wird. Unter der Voraussetzung, daß die Mikrophone $M_1$, $M_2$ sich im Nahfeldbereich einer Störquelle befinden, muß nicht nur die Laufzeit, sondern auch eine Amplitudenänderung berücksichtigt werden.

Das Verfahren zur Unterdrückung der Signale von Störquellen wird zweckmäßigerweise im Frequenzbereich der aufgenommenen Signale realisiert. Es wird daher im Frequenzspektrum der Signale eines Schallsensors die Signalfrequenz mit dem größten Anteil, d.h. der größten Amplitude, ermittelt, weil diese Frequenz im Frequenzspektrum die Grundfrequenz der Störquelle repäsentiert. Für diese Grundfrequenz der Störquelle wird anschließend ein Normierungsfaktor $\eta$ ermittelt, welcher, wie nachfolgend erläutert, einen komplexen Faktor darstellt. Die komplexen Zeiger für die Ausgangssignale der Mikrophone $M_1$, $M_2$ haben folgende Form:

$$\alpha_{M1} = A_{M1} \cdot e^{j\omega t}$$

$$\alpha_{M2} = A_{M2} \cdot e^{j\omega(t-\tau_s)}$$

Aus diesen Zeigern kann der Normierungsfaktor unter Einsatz der Laufzeit $\tau_s$) wie folgt ermittelt werden:

$$\mathcal{G}_{(\omega)} = \frac{\alpha_{M1}}{\alpha_{M2}} = \frac{A_{M1}}{A_{M2}} \cdot e^{j\omega\tau_s}$$

$$\mathcal{G}_{(f)} = \frac{A_{M1}}{A_{M2}} \cdot e^{j2\pi f\tau_s}$$

Der Normierungsfaktor $\mathcal{G}$ enthält also die Schallaufzeit zwischen den Mikrophonen bezüglich der Schalleinfallsrichtung und eine Amplitudenangleichung. Das Frequenzspektrum des Ausgangssignals von $M_2$ wird nun mit dem Normierungsfaktor $\mathcal{G}$ bewertet und dieses bewertete Mikrophonsignal vom Ausgangssignal des Mikrophons $M_1$ subtrahiert. Das kompensierte Ausgangssignal $\alpha$ ergibt sich somit zu:

$$\alpha_K = \alpha_{M1} - \mathcal{G} \cdot \alpha_{M2}$$

In diesem kompensierten Ausgangssignal ist die Grundfrequenz des Störsignals stark unterdrückt, aber die Nebenstörfrequenzen, welche aus subharmonischen und harmonischen Frequenzen der Grundfrequenz bestehen und von anderen Entstehungsorten kommen, sind als Störsignale noch vorhanden. Für eine optimale Kompensation einer Störquelle ist es daher notwendig, neben der Grundfrequenz einer Störquelle auch die subharmonischen bzw. harmonischen Frequenzen des Störsignals zu unterdrücken. Hierzu ist es erforderlich, den Normierungsfaktor auch für die harmonischen und subharmonischen Frequenzen eines Störsignals zu ermitteln und auf die zuvor beschriebene Weise anzuwenden. Die notwendigen Berechnungen können auf der Grundlage durchgeführter Messungen erfolgen unter Anwendung eines bekannten Störsignales und bei Beachtung bekannter Zusammenhänge, z.B. daß die Lage der ersten harmonischen Störfrequenz im Frequenzspektrum bei den durchgeführten Versuchen bei

$$\frac{1}{6}f$$

der Störgrundfrequenz liegt. Je nach Zusammensetzung einer Störfrequenz ist es daher zweckmäßig, entsprechende Normierungsfaktoren zu ermitteln und, wie nachstehend angegeben, zu berücksichtigen:

$f_{sg}$ = Grundfrequenz einer Störquelle,

$f_{sn}$ = Nebenfrequenz einer Störquelle

$$f_{sn} = n \cdot \frac{f_{sg}}{6} \quad, n = 1 \ldots m$$

Ein frequenzabhängiger Normierungsfaktor $\mathcal{G}_{(f)}$ ergibt sich daher zu:

$$\mathcal{G}_{(f)} = \mathcal{G}_{(fsn)}^{\frac{f_{(n+1)}-f}{f_{(n+1)}-f_{(n)}}} \cdot \mathcal{G}_{(fsn+1)}^{\frac{f-f_{(n)}}{f_{(n+1)}-f_{(n)}}}$$

mit $1 \leq n \leq 9$ und

$f_{(sn)}$ = Frequenz einer innerhalb der aktuellen Frequenz liegenden Störfrequenz im Frequenzspektrum.

Die Form der zuvor erläuterten Kompensation $\mathcal{G}_{(f)}$ hat den Vorteil, bei der Phasenangleichung zu einem linearen Übergang der Spektralfrequenzen zu führen, wobei die nichtlineare Interpolation der Amplituden vernachlässigbare Auswirkungen zeigt.

3

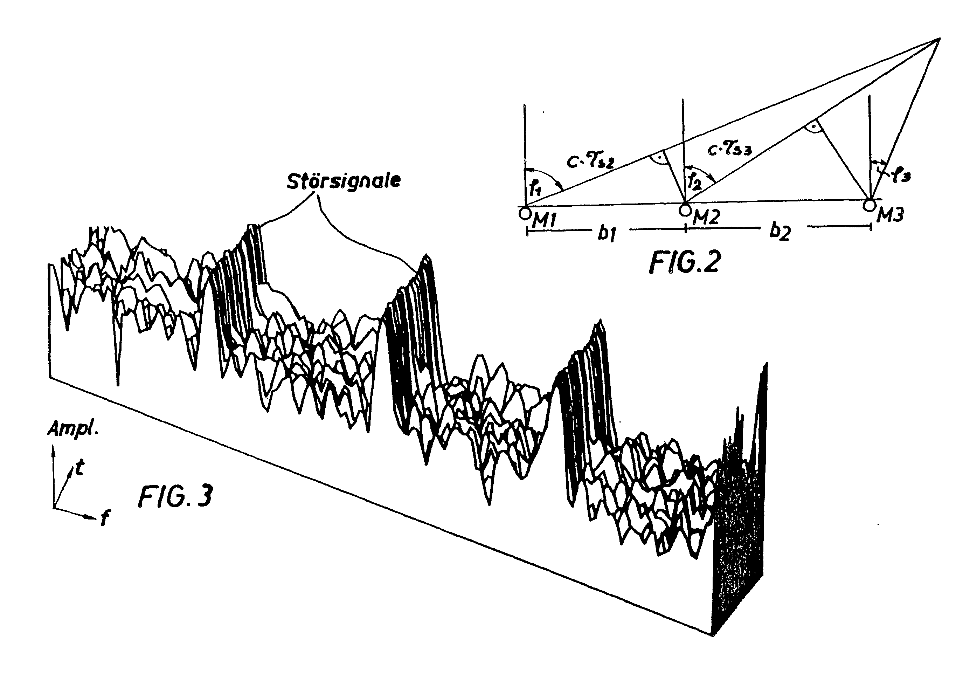

Wie aus Fig. 2 hervorgeht, kann eine Störquelle auch im Nahfeld der zur Signalerfassung vorgesehenen Sensoren auftreten, z.B. wenn eine Ortungsanlage auf einem selbst Störsignale aussendenden Trägerfahrzeug untergebracht ist. In diesem Fall ist daher der Einfallswinkel φ und die Amplitude des die Sensoren beeinflussenden Störsignals ungleich.

Der Störschall, der die in Fig. 2 dargestellten drei Mikrophone $M_1$, $M_2$, $M_3$ jeweils beeinflußt', kann wie folgt ausgedrückt werden:

$$\text{Störschall am Mikrophon 1} \quad M_1^* = S_{(\omega)}\, e^{j\omega t}$$

$$\text{Störschall am Mikrophon 2} \quad M_2^* = d_2 \cdot S_{(\omega)}\, e^{j\omega(t-\tau_{s2})}$$

$$\text{Störschall am Mikrophon 3} \quad M_3^* = d_2 \cdot d_3 \cdot S_{(\omega)}\, e^{j\omega(t-\tau_{s2}-\tau_{s3})}$$

Dabei bedeuten:

$d_2$ = Amplitudendämpfung für den Störschall von $M_1^*$ nach $M_2^*$

$d_3$ = Amplitudendämpfung für den Störschall von $M_2^*$ nach $M_3^*$

$\tau_{s2}$ = Laufzeit des Störschalls von $M_1^*$ nach $M_2^*$

$\tau_{s3}$ = Laufzeit des Störschalls von $M_2^*$ nach $M_3^*$

Die Signale an den Mikrophonen setzen sich hierbei aus einem Nutzsignalanteil aus dem Fernfeld und einem Störsignalanteil aus dem Nahfeld zusammen und können mathematisch wie folgt ausgedrückt werden

$$M_1 = A_{(\omega)} \cdot e^{j\omega t} + S_{(\omega)} \cdot e^{j\omega t}$$

$$M_2 = A_{(\omega)} \cdot e^{j\omega(t-\tau_{N2})} + d_2 \cdot S_{(\omega)} \cdot e^{j\omega(t-\tau_{s2})}$$

$$M_3 = A_{(\omega)} \cdot e^{j\omega(t-\tau_{N2}-\tau_{N3})} + d_2 \cdot d_3 S_{(\omega)} \cdot e^{j\omega(t-\tau_{s2}-\tau_{s3})}$$

Eine Kompensation zwischen den einzelnen Signalanteilen ist gemäß folgender Bewertung möglich:

$$M_{1/2k} = M_1 - \frac{1}{d_2} \cdot e^{j\omega\tau_{s2}} \cdot M_2$$

$$M_{2/3k} = M_2 - \frac{1}{d_3} \cdot e^{j\omega\tau_{s3}} \cdot M_3$$

Durch Einsetzen der zuvor ermittelten Signalwerte für $M_1$, $M_2$, $M_3$ lassen sich die Gleichungen für die kompensierten Mikrophonsignale ermitteln. Diese kompensierten Mikrophonsignale werden dann zur Bildung der Kreuzleistungsdichte herangezogen, um Richtungsinformationen der georteten Ziele zu erhalten. In den kompensierten Mikrophonsignalen steckt zwar noch ein sich in der Amplitude und der Phase auswirkenden Fehler, der abhängig ist vom Kompensationskoeffizienten und von der Einfallsrichtung des Nutzsignals. Bei ortsfestem Störsignal kann, da der Kompensationskoeffizient konstant ist, eine Korrektur für den ermittelten Winkel zum Nutzsignal bestimmt werden, während eine Korrektur für im Fernfeld liegende Störsignale nicht erforderlich wird, da der Korrekturfaktor 1 wird.

In der Darstellung nach Fig. 3 sind an aufeinander folgenden Zeiten aufgezeichnete Spektren von Mikrophonsignalen mit Störsignalen in Form eines sogenannten Signalbereiches aufgezeichnet. Aus dieser Darstellung sind die Signale einer im Nahfeld liegenden Störquelle mit der Grundfrequenz und harmonischen bzw. subharmonischen Frequenzen der Störquelle einwandfrei zu erkennen. Diese gestörten Mikrophonsignale sind zur Gewinnung von Richtungsinformationen nicht geeignet, da das Signal des Zieles weitgehend überdeckt ist. In der Darstellung nach Fig. 4, welche die gleichen, jedoch durch Kompensation von den Störsignalen befreiten Mikrophonsignale zeigt, sind die Signale eines georteten Zieles eindeutig zu erkennen. Eine Verarbeitung zur Bildung der Kreuzleistungsdichte führt daher zu exakten Richtungsinformationen eines georteten Zieles.

# EP 0 152 523 B1

## Patentansprüche

1. Verfahren zur Ortung einer Nutzsignalquelle, insbesondere einer Schallquelle, mit Hilfe von mindestens drei räumlich getrennt angeordneten Signalsensoren, die außer von den Signalen der Nutzsignalquelle auch von Signalen einer Störsignalquelle bekannter Lage beaufschlagt sind, bei welchem Verfahren aus den Sensorausgangssignalen abgeleitete Meßsignale paarweise kreuzkorreliert werden und bei dem die Lage der Nutzsignalquelle anhand der spektralen Leistungsdichte der Kreuzkorrelationsfunktionen ermittelt wird, dadurch gekennzeichnet, daß die beiden Meßsignale eines jeden Paares von zur Bildung der Leistungsdichte herangezogenen Meßsignalen durch Subtraktion der Ausgangssignale eines ersten und eines zweiten sowie des zweiten und eines dritten Signalsensors erzeugt werden, wobei das jeweils subtrahierte Sensorausgangssignal mit einem zuvor ermittelten Normierungsfaktor gewichtet ist, der den Laufzeitunterschied sowie den Amplitudenunterschied der Signale der Störsignalquelle zu den für die Bildung der jeweiligen Differenz herangezogenen Signalsensoren repräsentiert.

2. Verfahren nach Anspruch 1, dadurch gekennzeichnet, daß im Frequenzspektrum der Sensorausgangssignale die Signalfrequenzen mit relativ hoher Amplitude ermittelt und als Signale von Störsignalquellen mit dem dabei gewonnenen Normierungsfaktoren verwendet werden.

3. Verfahren nach Anspruch 1 oder 2, dadurch gekennzeichnet, daß die Normierungsfaktoren für jede als Signal einer Störsignalquelle im Frequenzspektrum eingestufte Signalfrequenz getrennt ermittelt und bei der Differenzbildung selektiv berücksichtigt ist.

4. Verfahren nach einem der Ansprüche 1 bis 3, dadurch gekennzeichnet, daß der Normierungsfaktor jeweils aus dem komplexen Quotienten der Amplituden und zugehöriger Phasen zweier Sensorausgangssignale besteht.

## Revendications

1. Procédé pour localiser une source de signaux utiles, notamment une source sonore à l'aide d'au moins trois capteurs de signaux situés de manière distante dans l'espace, et qui reçoivent, non seulement les signaux provenant de la source de signaux utiles mais également les signaux d'une source de signaux parasites, de localisaation connue, procédé selon lequel, partant des signaux de sortie des capteurs, on effectue une corrélation croisée par paires, des signaux de mesure ainsi obtenus et on détermine la position de la source de signaux utiles à partir de la densité spectrale de la puissance des fonctions de corrélation croisée, procédé caractérisé en ce que l'on forme les deux signaux de mesure de chaque paire de signaux servant à former la densité de puissance, par soustraction des signaux de sortie d'un premier et d'un second capteur ainsi que d'un second et d'un troisième capteur, le signal de sortie de capteur respectivement retranché ayant été préalablement pondéré par un coefficient de normalisation qui représente la différence de temps de parcours ainsi que la différence d'amplitude des signaux des sources de signaux parasites, par rapport aux capteurs de signaux utilisés pour former la différence respective.

2. Procédé selon la revendication 1, caractérisé en ce que, dans le spectre des fréquences des signaux de sortie des capteurs, on détermine les fréquences de signaux d'amplitude relativement élevées et on les utilise comme signaux provenant de sources de signaux parasites avec les coefficients de normalisation ainsi obtenus.

3. Procédé selon la revendication 1 ou 2, caractérisé en ce que les coefficients de normalisation pour chaque fréquence de signal classé dans le spectre des fréquences comme signal d'un source de signaux parasite, se déterminent de manière distincte et sont pris en compte sélectivement pour former la différence.

4. Procédé selon l'une des revendications 1 à 3, caractérisé en ce que le coefficient de normalisation se compose respectivement du quotient complexe des amplitudes et des phases de signaux de sortie de capteurs.

## Claims

1. A method of locating a wanted-signal source, particularly a source of sound, by means of at least three signal sensors which are arranged spatially separated and which are also acted upon by signals from an interfering-signal source of known position, apart from the signals from the useful-signal source, in which method, measured signals derived from the sensor output signals are cross-correlated in pairs and in which the position of the wanted-signal source is determined with reference to the spectral power density of the cross-correlation functions, characterised in that the two measured signals of each pair of measured signals used to form the power density are produced by subtraction of the output signals of a first and of a second signal sensor as well as of the second and of a third signal sensor, the particular sensor output signal subtracted being weighted by a scaling factor previously determined which represents the difference in travel time and the difference in amplitude in the signals from the interfering-signal source to the signal sensors used to form the particular difference.

2. A method according to Claim 1, characterised in that, in the frequency spectrum of the sensor output signals, the signal frequencies with relatively high amplitude are detected and used as signals from

interfering-signal sources with the scaling factors obtained in the course of this.

3. A method according to Claim 1 or 2, characterised in that the scaling factor is determined separately for each signal frequency classified in the frequency spectrum as a signal from an interfering-signal source and is taken into account selectively during the subtraction.

4. A method according to any one of Claims 1 to 3, characterised in that the scaling factor consists, in each case, of the complex quotient of the amplitudes and associated phases of two sensor output signals.

FIG.1

FIG.4

FIG.2

FIG.3